# EUROPEAN PATENT SPECIFICATION

(11) **EP 4 358 221 B1**
(45) Date of publication and mention of the grant of the patent: **09.09.2026**
(21) Application number: 21962848.4
(22) Date of filing: 04.11.2021
(51) Int. Cl.: H01M 10/0569, H01M 10/0568, H01M 10/052, H01M 10/0525, H01M 10/0567

(54) **ELECTROLYTIC SOLUTION, SECONDARY BATTERY AND ELECTRICAL DEVICE CONTAINING SAME**
ELEKTROLYT, SEKUNDÄRBATTERIE UND ELEKTRISCHE VORRICHTUNG MIT DER SEKUNDÄRBATTERIE
ÉLECTROLYTE, BATTERIE SECONDAIRE ET DISPOSITIF ÉLECTRIQUE COMPRENANT UNE BATTERIE SECONDAIRE

(43) Date of publication of application: 24.04.2024
(73) Proprietor: Contemporary Amperex Technology (Hong Kong) Limited, Central, Central And Western District (HK)
(72) Inventor: ZHANG, Cuiping, Ningde, Fujian 352100 (CN); HAN, Changlong, Ningde, Fujian 352100 (CN); JIANG, Bin, Ningde, Fujian 352100 (CN); WU, Zeli, Ningde, Fujian 352100 (CN); HUANG, Lei, Ningde, Fujian 352100 (CN)
(74) Representative: Gong, Jinping
(86) International application number: PCT/CN2021/128534
(87) International publication number: WO 2023/077330

(56) References cited:
- WO-A1-2021/166771
- WO-A1-2021/166771
- CN-A- 103 296 311
- CN-A- 103 887 563
- CN-A- 105 489 937
- CN-A- 111 082 138
- CN-A- 111 211 353
- US-A- 5 830 600
- US-A1- 2012 244 445
- LI LONGSHAN ET AL: "Recent progress on electrolyte functional additives for protection of nickel-rich layered oxide cathode materials", JOURNAL OF ENERGY CHEMISTRY, ELSEVIER, AMSTERDAM, NL, vol. 65, 17 June 2021 (2021-06-17), pages 280 - 292, XP086863454, ISSN: 2095-4956, [retrieved on 20210617], DOI: 10.1016/J.JECHEM.2021.05.049

## Description

### TECHNICAL FIELD

This application relates to the field of batteries, and in particular, to an electrolytic solution as specified in any of claims 1-12, a secondary battery as specified in claim 13, and an electrical device containing the secondary battery as specified in claim 14.

### BACKGROUND

In recent years, with increasing concern about environmental issues, people are carrying out active research on new energy that can be used in electric vehicles (EVs, such as gasoline vehicles and diesel vehicles) and hybrid electric vehicles (HEVs) in place of fossil fuels. In addition to the environmental concerns, urgent requirements for batteries of high safety and a long cycle life are also compelling researchers to conduct in-depth studies on existing batteries.

US2012/244445A1 discloses an electrolytic solution, comprising 4,5-dimethyl-2,[2,2,3,3-tetrafluoropropyl)oxyl]-1,3,2-dioxaphospholane 2-oxide and ethylene carbonate.

Therefore, how to achieve a good trade-off between safety performance and electrochemical performance of batteries is still an urgent problem to be solved in this field.

### SUMMARY

The claimed subject-matter is defined by the appended claims. This application is put forward in view of the foregoing problems. An objective of this application is to provide an electrolytic solution as specified in any of claims 1-12, a secondary battery as specified in claim 13, and an electrical device containing the secondary battery as specified in claim 14. The secondary battery achieves high safety performance and a long cycle life.

To fulfil the foregoing objective, according to a first aspect of this application, an electrolytic solution is provided, including a solvent. The solvent includes a compound represented by Formula (1) below and ethylene carbonate. Based on a total weight of the solvent, a weight percent of the ethylene carbonate is 5 wt% to 25 wt%.

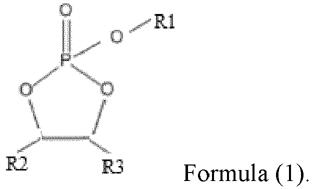

In Formula (1), R1 is a fluorinated C1 to C6 alkyl or a fluorinated C2 to C6 alkenyl; and R2 and R3 are identical or different, and each independently, are a hydrogen atom, a fluorine atom, or a fluorinated C1 to C6 alkyl.

In any embodiment, based on the total weight of the solvent, the weight percent of the ethylene carbonate is 10 wt% to 20 wt%.

In any embodiment, based on the total weight of the solvent, a weight percent of the compound represented by Formula (1) is 5 wt% to 35 wt%, and optionally 10 wt% to 30 wt%.

In any embodiment, in the compound represented by Formula (1), R1 is a perfluoro C1 to C6 alkyl. Preferably, in the compound represented by Formula (1), R1 is -CF₃ or -C2F₅; and R2 and R3, each independently, are a hydrogen atom or a fluorine atom.

The compound represented by Formula (1) and a given amount of ethylene carbonate, which are included as a solvent in the electrolytic solution according to this application, enhance the safety performance and cycle life of the battery.

In any embodiment, the solvent further includes dimethyl carbonate and/or carboxylate. The carboxylate is at least one of methyl formate, ethyl formate, ethyl acetate, ethyl propionate, or propyl formate, and preferably is propyl formate. Optionally, based on the total weight of the solvent, a weight percent of the compound represented by Formula (1) is denoted as W1, a weight percent of the dimethyl carbonate and/or carboxylate is denoted as W2, and therefore, the electrolytic solution satisfies: 1.5 ≤ W2/W1 ≤ 3, and optionally 2 ≤ W2/W1 ≤ 2.5.

The electrolytic solution according to this application further includes the low-viscosity organic solvents such as dimethyl carbonate and/or carboxylate, thereby increasing electrical conductivity of the electrolytic solution, and in turn, improving power performance and lifespan of the battery. Therefore, the safety performance, cycle life, and power performance of the battery are high.

In any embodiment, the electrolytic solution includes an electrolyte salt. The electrolyte salt includes lithium bisfluorosulfonimide and lithium hexafluorophosphate. A volumetric molar concentration of the lithium bisfluorosulfonimide in the electrolyte salt is denoted as C1, a volumetric molar concentration of the lithium hexafluorophosphate in the electrolyte salt is denoted as C2, and therefore, the electrolytic solution satisfies: 0.25 ≤ C1/C2 ≤ 9, and optionally 1 ≤ C1/C2 ≤ 4. In addition, 0.2 mol/L ≤ C1 ≤ 0.9 mol/L; and/or, 0.1 M/L ≤ C2 ≤ 0.8 M/L.

Based on a total weight of the electrolytic solution, the weight percent of the compound represented by Formula (1) is denoted as A1, a weight percent of the lithium bisfluorosulfonimide is denoted as A2, and therefore, the electrolytic solution satisfies: 0.3 ≤ A1/A2 ≤ 8.4, and optionally 0.4 ≤ A1/A2 ≤ 3.

The electrolytic solution according to this application further includes the lithium bisfluorosulfonimide, thereby increasing electrical conductivity of the electrolytic solution, and in turn, improving power performance and lifespan of the battery. Therefore, the safety performance, cycle life, and power performance of the battery are high.

In any embodiment, the electrolytic solution further includes an additive. The additive includes vinylene carbonate. In addition, based on a total weight of the electrolytic solution, a weight percent of the vinylene carbonate is less than or equal to 5 wt%, and optionally is 0.1 wt% to 3 wt%.

In any embodiment, a viscosity of the electrolytic solution at 25 °C is less than or equal to 5 mPa·s, and optionally 2 mPa·s to 5 mPa·s.

According to a second aspect of this application, this application provides a secondary battery. The secondary battery includes the electrolytic solution according to the first aspect of this application. The secondary battery prepared from the electrolytic solution according to this application achieves high safety performance and a high cycle life.

According to a third aspect of this application, this application provides an electrical device. The electrical device includes the secondary battery according to the second aspect of this application.

### Beneficial Effects

According to this application, an electrolytic solution that improves the safety performance and cycle performance of the secondary battery is provided; a secondary battery of high safety performance and high cycle performance that uses the electrolytic solution is provided; and an electrical device containing the secondary battery is provided.

### DETAILED DESCRIPTION OF EMBODIMENTS

The following describes in detail an electrolytic solution, a secondary battery, and an electrical device containing the secondary battery according to this application.

For brevity, some numerical ranges are disclosed herein for illustrative purpose only. However, any lower limit may be combined with any other upper limit to form an unspecified range, any lower limit may be combined with any other lower limit to form an unspecified range, and any upper limit may be combined with any other upper limit to form an unspecified range. In addition, although not explicitly stated, any point and any single numerical value between end points of a range are included in the range. Therefore, each point or each single numerical value may be used as a lower limit or upper limit of the range to combine with any other point or other single numerical value or with any other lower or upper limit to form an unspecified range. Understandably, numerical values are enumerated for illustrative purpose only, but not exhaustive by any means.

It is hereby noted that in the description hereof, unless otherwise specified, a range defined by a numerical value qualified by "at least" or "at most", "≤", or "≥" includes this numerical value; "at least one" means one or more; and "more" in the phrase "one or more" means two or more.

### Electrolytic Solution

According to a first aspect of this application, this application discloses an electrolytic solution. The electrolytic solution includes a solvent. The solvent includes a compound represented by Formula (1) below and ethylene carbonate. Based on a total weight of the solvent, a weight percent of the ethylene carbonate is less than or equal to 25 wt%.

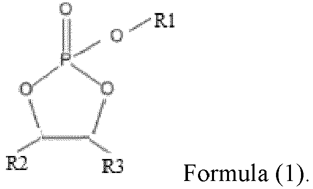

In Formula (1), R1 is a fluorinated C1 to C6 alkyl or a fluorinated C2 to C6 alkenyl; and R2 and R3 are identical or different, and each independently, are a hydrogen atom, a fluorine atom, or a fluorinated C1 to C6 alkyl.

In this application, the term "C1 to C6 alkyl" means a linear or branched alkyl group containing 1 to 6 carbon atoms, and includes, but without being limited to, -CH3, -CH2CH3, - CH2CH2CH3, -CH(CH3)2, -CH2CH2CH2CH3, -C(CH3)3, -CH(CH3) CH2CH3, -CH2CH (CH3)2, -CH2CH2CH2CH2CH3, -CH (CH3) CH2CH2CH3, -CH2CH (CH3)CH2CH3, - CH2CH2CH(CH3)2, -CH2CH2CH2CH2 CH2CH3, -CH(C2H5)CH2CH3, -C(CH3)2CH2CH3, - CH(CH3)C(CH3)3, and the like.

The term "fluorinated C1 to C6 alkyl" in this application means a group formed by substituting fluorine for one or more hydrogen atoms in the "C1 to C6 alkyl", and includes, but without being limited to, -CH2F, -CHF2, -CF3, -CH2CH2F, -CH2CF3, -C2F5, -CH2CH2CH2F, - CH2CH2CF3, -C3F7, -CH(CF3)2, -CH2CH2CH2CF3, -C4F9, -CH2CH2CH2CH2CH2CF3, and the like.

The term "fluorinated C2 to C6 alkenyl" in this application means a group formed by replacing one or more single bonds in the "fluorinated C1 to C6 alkyl" with a double bond, and includes, but without being limited to, -CH=CHF, -CF=CF2, -CH=CHCH2F, -CH2CH=CF2, - CH=CHCH2CH=CHCF3, and the like.

In an embodiment of this application, preferably, in the compound represented by Formula (1), R1 is a perfluoro C1 to C6 alkyl.

In an embodiment of this application, preferably, in the compound represented by Formula (1), R1 is -CF₃ or -C2F₅; and R2 and R3, each independently, are a hydrogen atom or a fluorine atom.

The compound represented by Formula (1) is exemplified by, but without being limited to, the compounds shown in the following Table 1.

**Table 1**

| Serial number of compound represented by Formula (1) | R1 | R2 | R3 |
|---|---|---|---|
| Compound 1 | CF3 | H | H |
| Compound 2 | CH2F | H | H |
| Compound 3 | CHF2 | H | H |
| Compound 4 | C2F5 | H | F |
| Compound 5 | CH2CH2F | F | H |
| Compound 6 | CH2F | CH2CH2F | CH2F |
| Compound 7 | CF3 | H | CF3 |
| Compound 8 | CF3 | CH2F | CH2F |
| Compound 9 | -CH=CHF | H | H |
| Compound 10 | CH2CF3 | H | H |

The electrolytic solution according to this application contains both the compound represented by Formula (1) and a given amount of ethylene carbonate. Therefore, the battery achieves a trade-off between relatively high safety performance and a relatively long cycle life.

The inventor of this application finds that ethylene carbonate is hardly resistant to oxidation, and is prone to oxidation and gassing on a positive electrode when a battery is fully charged and stored at a high temperature, resulting in battery swelling. In contrast, the compound represented by Formula (1) can participate in SEI film formation in advance by virtue of a relatively low oxidation potential, thereby reducing the gas produced by oxidative decomposition of the ethylene carbonate, and in turn, improving the safety performance and cycle life of the battery. However, if the weight percent of the ethylene carbonate is greater than 25%, even if the compound represented by Formula (1) is added to participate in the SEI film formation in advance, the secondary battery is also exposed to safety hazards and unable to achieve both high safety performance and a high cycle life.

In some embodiments, based on the total weight of the electrolytic solution solvent, the weight percent of the ethylene carbonate may be 5 wt% to 25 wt%, and may be, for example, 10 wt% to 20 wt%. With the weight percent of the ethylene carbonate falling within the specified range, the safety performance and cycle life of the battery can be further improved.

In some embodiments, based on the total weight of the solvent, the weight percent of the compound represented by Formula (1) is 5 wt% to 35 wt%, and may be, for example, 10 wt% to 30 wt%, or 15 wt% to 30 wt%. When the compound represented by Formula (1) falls within the specified range, the kinetic performance of the battery can be further improved on the basis of ensuring relatively high safety performance and a relatively long cycle life of the battery.

In some embodiments, the solvent further includes dimethyl carbonate and/or carboxylate. The carboxylate may be at least one of methyl formate, ethyl formate, ethyl acetate, ethyl propionate, or propyl formate, and optionally is propyl formate. The viscosity of the compound represented by Formula (1) is relatively high, and can be reduced by adding the foregoing organic solvent, thereby improving the power performance and service life of the battery. The resulting battery is more excellent in performance, that is, excellent in safety, cycle life, and power performance.

In addition, optionally, based on the total weight of the solvent, a weight percent of the compound represented by Formula (1) is denoted as W1, a weight percent of the dimethyl carbonate and/or carboxylate is denoted as W2, and therefore, the electrolytic solution satisfies: 1.5 ≤ W2/W1 ≤ 3, and optionally 2 ≤ W2/W1 ≤ 2.5. With the W2/W1 ratio falling within the range specified above, a good effect of reducing the viscosity can be achieved, and the battery life can be increased advantageously.

In some embodiments, the electrolytic solution includes an electrolyte salt. The type of the electrolyte salt is not particularly limited, and may be selected as actually required. For example, the electrolyte salt may be one or more selected from lithium hexafluorophosphate, lithium bisfluorosulfonimide, lithium bis(trifluoromethyl)sulfonimide, lithium tetrafluoroborate, lithium trifluoromethanesulfonate, lithium hexafluoroarsenate, lithium bis(oxalato)borate, or lithium perchlorate. Preferably, the electrolyte salt includes lithium hexafluorophosphate and lithium bisfluorosulfonimide.

When a volumetric molar concentration of the lithium bisfluorosulfonimide in the electrolyte salt is denoted as C1 and a volumetric molar concentration of the lithium hexafluorophosphate in the electrolyte salt is denoted as C2, the electrolytic solution satisfies: 0.25 ≤ C1/C2 ≤ 9, and optionally 1 ≤ C1/C2 ≤ 4. In addition, preferably, 0.2 mol/L ≤ C1 ≤ 0.9 mol/L; and/or, 0.1 M/L ≤ C2 ≤ 0.8 M/L.

When used as a solvent of the electrolytic solution, the compound represented by Formula (1) is of a relatively high viscosity. The lithium bisfluorosulfonimide added as an easily dissociable lithium salt is conducive to movement of lithium ions, improves the electrical conductivity of the electrolytic solution, enhances the power performance and service life of the battery, and achieves more excellent technical effects.

Preferably, based on a total weight of the electrolytic solution, when the weight percent of the compound represented by Formula (1) is denoted as A1 and a weight percent of the lithium bisfluorosulfonimide is denoted as A2, the electrolytic solution satisfies: 0.3 ≤ A1/A2 ≤ 8.4, and optionally 0.4 ≤ A1/A2 ≤ 3. With the A1/A2 ratio falling within the range specified above, the electrical conductivity can be improved on the basis of ensuring the safety performance of the battery.

In some embodiments, the electrolytic solution further includes an additive. Examples of the additive include vinylene carbonate, 1,3-propane sultone, sulfates, fluoroethylene carbonate, lithium difluorophosphate, lithium tetrafluoroborate, and the like. Because vinylene carbonate is reduced at the negative electrode in precedence over the compound represented by Formula (1) and the ethylene carbonate (EC) and participates in forming of the SEI film, reductive decomposition of the electrolytic solution solvent can be avoided. Therefore, preferably the additive includes vinylene carbonate. Further preferably, based on the total weight of the electrolytic solution, the weight percent of the vinylene carbonate is less than or equal to 5 wt%, and optionally is 0.1 wt% to 3 wt%.

In some embodiments, a viscosity of the electrolytic solution at 25 °C is less than or equal to 5 mPa·s, and optionally 2 mPa·s to 5 mPa·s.

### Secondary Battery

The secondary battery according to the second aspect of this application includes a positive electrode plate, a negative electrode plate, a separator, and the electrolytic solution according to the first aspect of this application. In a charge-and-discharge cycle of the battery, active ions are shuttled between the positive electrode plate and the negative electrode plate by intercalation and deintercalation. The electrolytic solution serves to conduct ions between the positive electrode plate and the negative electrode plate. Located between the positive electrode plate and the negative electrode plate, the separator mainly serves to prevent a short circuit between the positive electrode plate and the negative electrode plate, and is penetrable to ions.

### Positive electrode plate

The positive electrode plate includes a positive current collector and a positive film layer that overlays at least one surface of the positive current collector. The positive film layer includes a positive active material according to the first aspect of this application.

As an example, the positive current collector includes two surfaces opposite to each other in a thickness direction thereof. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material base layer and a metal layer formed on at least one surface of the polymer material base layer. The composite current collector may be formed by overlaying a polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known in the art for use in a battery. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. One of the positive active materials may be used alone, or at least two thereof may be combined and used together. Examples of the lithium transition metal oxide may include, but are not limited to, at least one of lithium cobalt oxide (such as LiCoO₂), lithium nickel oxide (such as LiNiO₂), lithium manganese oxide (such as LiMnO₂, and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but are not limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, and the binder and any other ingredients in a solvent (such as N-methyl-pyrrolidone) to form a positive slurry, coating a positive current collector with the positive slurry, and performing steps such as drying and cold pressing to obtain the positive electrode plate.

### Negative Electrode Plate

The negative electrode plate includes a negative current collector and a negative film layer disposed on at least one surface of the negative current collector. The negative film layer includes a negative active material.

As an example, the negative current collector includes two surfaces opposite to each other in a thickness direction thereof. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material base layer and a metal layer formed on at least one surface of the polymer material base layer. The composite current collector may be formed by overlaying a polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material that is well known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, silicon-oxygen compound, silicon-carbon composite, silicon-nitrogen composite, or silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be combined and used together.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold pressing to obtain the negative electrode plate.

### Separator

In some embodiments, the secondary battery further includes a separator. The type of the separator is not particularly limited in this application, and may be any well-known porous separator that is highly stable both chemically and mechanically.

In some embodiments, the separator may be made of at least one selected from glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be wound or stacked to form an electrode assembly.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

The shape of the secondary battery is not particularly limited in this application, and may be cylindrical, prismatic or any other shape.

In some embodiments, the secondary battery may be assembled into a battery module. The battery module may include one or more secondary batteries, and the specific number of secondary batteries in a battery module may be selected by a person skilled in the art depending on the application scenario and capacity of the battery module.

In some embodiments, the battery modules may be assembled into a battery pack. The battery pack may include one or more battery modules, and the specific number of battery modules in a battery pack may be selected by a person skilled in the art depending on practical applications and capacity of the battery pack.

### Electrical Device

A third aspect of this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for the electrical device according to practical requirements of the electrical device.

### Embodiments

The following describes embodiments of this application. The embodiments described below are illustrative, and are merely intended to construe this application but not to limit this application. In a case that no specific technique or condition is specified in an embodiment, the techniques or conditions described in the literature in this field or described in the instruction manual of the product may apply. A reagent or instrument used herein without specifying the manufacturer is a conventional product that is commercially available in the market.

Compounds 1 to 6 used in the following embodiments are all purchased from Sinopharm Chemical Reagent Co., Ltd., and the chemical names are as follows:
Compound 1: 2-trifluoromethoxy-1,3,2-dioxaphospholane 2-oxide;
Compound 2: 2-monofluoromethoxy-1,3,2-dioxaphospholane 2-oxide;
Compound 3: 2-difluoromethoxy-1,3,2-dioxaphospholane 2-oxide;
Compound 4: 2-pentafluoroethoxy-5-fluoro-1,3,2-dioxaphospholane 2-oxide;
Compound 5: 2-(2-fluoroethoxy)-4-fluoro-1,3,2-dioxaphospholane 2-oxide; and

Compound 6: 2-monofluoromethoxy-4-(2-fluoroethyl)-5-monofluoromethyl-1,3,2-dioxaphospholane 2-oxide.

### Viscosity at 25 °C

The viscosity of the electrolytic solution herein is measured by using a viscometer (model: Brookfield DV II T) based on the standard GB/T 10247-2008 Viscosity Measurement Method*.*

### Embodiment 1

Mixing well 4.275 grams of the compound represented by Formula (1), 4.275 grams of ethylene carbonate, and 76.95 grams of ethyl methyl carbonate (at a weight ratio of 5: 5: 90) as a solvent in an argon-filled glovebox (in which the moisture content is less than 10 ppm and the oxygen content is less than 1 ppm). Slowly adding 12.5 grams of lithium hexafluorophosphate into the mixture until the concentration is 1 mol/L, so as to obtain an electrolytic solution with a lithium salt concentration of 1 mol/L after the lithium hexafluorophosphate as a lithium salt is completely dissolved. Finally, adding 2 grams of vinylene carbonate to obtain the electrolytic solution.

Table 2 shows the specific type and content of each component in the electrolytic solution and the mixing ratio between the components.

### Embodiments 2 to 11

Identical to Embodiment 1 except the following steps in the preparation of the electrolytic solution: adding the compound represented by Formula (1) and the ethylene carbonate according to Table 2, and adjusting the weight percent of the ethyl methyl carbonate so that the weight percent of the solvent in the total weight of the electrolytic solution always keeps at 85.5 wt%.

### Embodiment 12

Mixing 12.825 grams of the compound represented by Formula (1), 8.55 grams of ethylene carbonate, and 38.475 grams of ethyl methyl carbonate as a solvent in an argon-filled glovebox (in which the moisture content is less than 10 ppm and the oxygen content is less than 1 ppm), adding 25.65 grams of dimethyl carbonate, and mixing well. Slowing adding 12.5 grams of lithium hexafluorophosphate into the mixture until the concentration is 1 mol/L, so as to obtain an electrolytic solution with a lithium salt concentration of 1 mol/L after the lithium hexafluorophosphate as a lithium salt is completely dissolved. Finally, adding 2 grams of vinylene carbonate to obtain the electrolytic solution.

Table 3 shows the specific type and content of each component in the electrolytic solution and the mixing ratio between the components.

### Embodiment 13

Identical to Embodiment 12 except the following step in the preparation of the electrolytic solution: in Embodiment 12, adding 25.65 grams of propyl formate in place of the dimethyl carbonate according to Table 3.

### Embodiment 14

Mixing 12.534 grams of the compound represented by Formula (1), 8.356 grams of ethylene carbonate, and 62.667 grams of ethyl methyl carbonate as a solvent in an argon-filled glovebox (in which the moisture content is less than 10 ppm and the oxygen content is less than 1 ppm), and adding 10.318 grams of lithium bisfluorosulfonimide (C1 = 0.67 mol/L) and 4.125 grams of lithium hexafluorophosphate (C2 = 0.33 mol/L) as lithium salts into the mixture until the concentration sum of the lithium salts is 1 mol/L, so as to obtain an electrolytic solution with a lithium salt concentration of 1 mol/L. Finally, adding 2 grams of vinylene carbonate. Mixing well to obtain an electrolytic solution.

### Embodiments 15 to 23

In Embodiments 1 to 9, further adding a solvent and lithium hexafluorophosphate, the types and contents of which are shown in Table 3, so as to prepare an electrolytic solution.

### Comparative Embodiments 1 to 2 and Comparative Embodiment 8

Preparing an electrolytic solution in the same way as in Embodiment 1 according to the components and mixing ratios shown in Table 4.

### Comparative Embodiment 3

Mixing 12.534 grams of cyclic organophosphorus, 8.356 grams of ethylene carbonate, 25.067 grams of ethyl acetate, and 37.6 grams of ethyl methyl carbonate as a solvent in an argon-filled glovebox (in which the moisture content is less than 10 ppm and the oxygen content is less than 1 ppm) according to Table 4, and mixing well. Slowly adding 4.125 grams of lithium hexafluorophosphate (0.33 mol/L) and 10.318 grams of lithium bisfluorosulfonimide (C1 = 0.67 mol/L) as lithium salts into the mixture until the concentration of the lithium salts is 1 mol/L, so as to obtain an electrolytic solution with a lithium salt concentration of 1 mol/L after the lithium salts are completely dissolved. Finally, adding 2 grams of vinylene carbonate to obtain an electrolytic solution.

### Comparative Embodiments 4 to 7

Preparing an electrolytic solution in the same way as in Comparative Embodiment 3 according to the components and mixing ratios shown in Table 4.

**Table 2**

| | Compound represented by Formula (1) | | Weight percent of ethylene carbonate based on total weight of solvent (wt%) | Weight percent of vinylene carbonate based on total weight of electrolytic solution (wt%) | Viscosity of electrolytic solution at 25 °C |
|---|---|---|---|---|---|
| | Serial number of compound | Weight percent of compound represented by Formula (1) based on total weight of solvent (wt%) | | | |
| Embodiment 1 | Compound 1 | 5 | 5 | 2 | 3.36 |
| Embodiment 2 | Compound 1 | 15 | 10 | 2 | 3.51 |
| Embodiment 3 | Compound 1 | 30 | 10 | 2 | 4.20 |
| Embodiment 4 | Compound 1 | 35 | 10 | 2 | 4.25 |
| Embodiment 5 | Compound 2 | 5 | 10 | 2 | 3.40 |
| Embodiment 6 | Compound 3 | 5 | 10 | 2 | 3.46 |
| Embodiment 7 | Compound 4 | 5 | 15 | 2 | 3.56 |
| Embodiment 8 | Compound 5 | 5 | 15 | 2 | 3.53 |
| Embodiment 9 | Compound 1 | 10 | 20 | 2 | 3.62 |
| Embodiment 10 | Compound 6 | 14 | 22 | 2 | 4.06 |
| Embodiment 11 | Compound 1 | 12 | 25 | 2 | 4.14 |

**Table 3**

| | Compound represented by Formula (1) | | Weight percent of ethylene carbonate based on total weight of solvent (wt%) | W2/W1 | C1/C2 | A1/ A2 | Weight percent of vinylene carbonate based on total weight of electrolytic solution (wt%) | Viscosity of electrolytic solution at 25 °C |
|---|---|---|---|---|---|---|---|---|
| | Serial number of compound | Weight percent of compound based on total weight of solvent (wt%) | | | | | | |
| Embodiment 12 | Compound 1 | 15 | 10 | Weight ratio between dimethyl carbonate and compound represented by Formula (1) is 2 | - | - | 2 | 3.34 |
| Embodiment 13 | Compound 1 | 15 | 10 | Weight ratio between propyl formate and compound represented by Formula (1) is 2 | - | - | 2 | 3.03 |
| Embodiment 14 | Compound 1 | 15 | 10 | - | 2 | 1.21 | 2 | 3.60 |
| Embodiment 15 | Compound 1 | 5 | 10 | Weight ratio between ethyl formate and compound represented by Formula (1) is 2 | 2 | 0.4 | 3 | 2.43 |
| Embodiment 16 | Compound 1 | 15 | 10 | Weight ratio between ethyl formate and compound represented by Formula (1) is 2 | 2 | 1.2 | 3 | 3.23 |
| Embodiment 17 | Compound 1 | 30 | 10 | Weight ratio between ethyl formate and compound represented by Formula (1) is 2 | 2 | 2.4 | 3 | 3.0 |
| Embodiment 18 | Compound 1 | 35 | 10 | Weight ratio between ethyl formate and compound represented by Formula (1) is 1.5 | 2 | 2.8 | 3 | 3.20 |
| Embodiment 19 | Compound 2 | 5 | 10 | Weight ratio between ethyl acetate and compound represented by Formula (1) is 2 | 2 | 0.4 | 3 | 2.31 |
| Embodiment 20 | Compound 3 | 5 | 10 | Weight ratio between propyl acetate and compound represented by Formula (1) is 2 | 2 | 0.4 | 3 | 2.37 |
| Embodiment 21 | Compound 4 | 5 | 15 | Weight ratio between ethyl propionate and compound represented by Formula (1) is 2 | 2 | 0.4 | 3 | 3.01 |
| Embodiment 22 | Compound 5 | 5 | 15 | Weight ratio between ethyl acetate and compound represented by Formula (1) is 2 | 2 | 0.4 | 3 | 2.89 |
| Embodiment 23 | Compound 1 | 10 | 20 | Weight ratio between propyl formate and compound represented by Formula (1) is 1.5 | 3 | 0.72 | 2 | 2.62 |

**Table 4**

| | Cyclic organophosphorus | | Weight percent of ethylene carbonate based on total weight of solvent (wt%) | W2/W"1 (W"1 represents weight percent of cyclic organophosphorus in solvent) | C1/C2 | A"1/A2 (A"1 represents weight percent of cyclic organophosphorus in electrolytic solution) | Weight percent of vinylene carbonate based on total weight of electrolytic solution (wt%) | Viscosity of electrolytic solution at 25 °C |
|---|---|---|---|---|---|---|---|---|
| | Type | Weight percent of compound based on total weight of solvent (wt%) | | | | | | |
| Comparative Embodiment 1 | Compound 1 | 40 | 26 | - | - | - | 2 | 3.65 |
| Comparative Embodiment 2 | Compound 2 | 5 | 26 | - | - | - | 2 | 3.54 |
| Comparative Embodiment 3 | 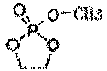 | 15 | 10 | Weight ratio between ethyl acetate and cyclic organophosphorus is 2 | 2 | 1.21 | 2 | 3.42 |
| Comparative Embodiment 4 | 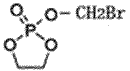 | 15 | 15 | Weight ratio between ethyl acetate and cyclic organophosphorus is 2 | 2 | 1.21 | 2 | 4.01 |
| Comparative Embodiment 5 | 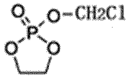 | 15 | 15 | Weight ratio between ethyl acetate and cyclic organophosphorus is 2 | 3 | 1.20 | 3 | 3.81 |
| Comparative Embodiment 6 | 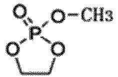 | 15 | 26 | Weight ratio between ethyl acetate and cyclic organophosphorus is 2 | 3 | 1.23 | 1 | 3.54 |
| Comparative Embodiment 7 | 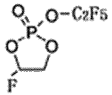 | 10 | 27 | Weight ratio between ethyl acetate and cyclic organophosphorus is 2 | 3 | 0.82 | 1 | 4.12 |
| Comparative Embodiment 8 | 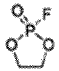 | 2 | 25 | - | - | - | - | 3.21 |

In addition, secondary batteries are prepared from the electrolytic solutions obtained in Embodiments 1 to 23 and Comparative Embodiments 1 to 8 separately according to the following processes, and are subjected to a performance test. Table 5 and Table 6 show the test results.

### Preparing a secondary battery

### (1) Preparing a positive electrode plate

Mixing LiNi_{0.8}Co_{0.1}Mn_{0.1}O₂ as a positive active material, Super P as a conductive agent, and polyvinylidene difluoride (PVDF) as a binder in an N-methyl-pyrrolidone) (NMP) solvent system to make a positive slurry. In the positive slurry, a solid content is 50 wt%. A mass ratio between LiNi_{0.8}Co_{0.1}Mn_{0.1}O₂, Super P, and PVDF in the solid components is 8: 1: 1. Coating a current collector aluminum foil with the positive slurry, drying the foil at 85 °C, and then cold-calendering the foil. Performing edge trimming, cutting, and slitting, and then drying at 85 °C for 4 hours under a vacuum condition to make a positive electrode plate.

### (2) Preparing a negative electrode plate

Mixing well graphite as a negative active material, a conductive agent Super P, a thickener CMC, and a binder styrene-butadiene rubber (SBR) in deionized water to make a negative slurry. In the negative slurry, a solid content is 30 wt%. A mass ratio between graphite, Super P, CMC, and binder styrene butadiene rubber (SBR) in the solid components is 80: 15: 3: 2. Coating a current collector copper foil with the negative slurry, drying the foil at 85 °C, and then performing cold-calendering, edge trimming, cutting, and slitting, and drying at 120 °C for 12 hours under a vacuum condition to make a negative electrode plate.

### (3) Preparing a secondary battery

Using a polyethylene (PE) film as a separator. Stacking the prepared positive electrode plate, separator, and negative electrode plate in sequence, placing the separator between the positive electrode plate and the negative electrode plate to serve a separation function, and winding the stacked structure to obtain a bare cell. Welding tabs and then putting the bare cell into an outer package. Injecting the electrolytic solution prepared in the foregoing embodiments and comparative embodiments into the dried bare cell, and performing steps such as sealing, standing, chemical formation, shaping, and capacity grading to obtain a secondary battery.

### Testing the secondary battery

### (a) Safety performance

Adjusting the ambient temperature to 25 °C, and charging the secondary battery at a constant current of 1 C until the voltage reaches 4.25 V, and then charging the battery at a constant voltage of 4.25 V until the current reaches 0.05 C. Affixing a temperature sensing wire to a central position on the surface of the battery. Subsequently, putting the battery into a heating furnace. Increasing the temperature of the furnace at a speed of 10 °C/min, and then keeping the temperature constant for 30 minutes. When the temperature of the temperature sensing wire surges instantaneously to a value much higher than the furnace temperature, it is deemed that the battery is thermally runaway at this time. Recording the furnace temperature at the time of thermal runaway of the battery and the duration of the furnace temperature.

### (b) Cycle performance

Charging the battery at a constant current of 1 C under a 25 °C temperature until the voltage reaches 4.25 V, and then charging the battery at a constant voltage until the current reaches 0.05 C. Subsequently, discharging the battery at 1 C until the voltage reaches 2.8 V. Recording a first-cycle discharge capacity C1, thereby completing one cycle. Repeating such cycles and recording the 200^{th}-cycle discharge capacity as Cn.${200}^{th} - cycle capacity retention rate of battery \left(%\right) = \left(Cn/C1\right) \times 100 % .$

### (c) Power performance

Charging the secondary battery a constant current of 1 C at a room temperature until the voltage reaches 4.25 V, and then charging the battery at a constant voltage until the current reaches 0.05 C. Leaving the fully charged battery to stand for 5 minutes, and then discharging the battery at 1 C for 30 minutes (the state of charge of the battery is 50% SOC). Leaving the battery to stand for 5 minutes, and then adjusting the temperature to 25 °C. Leaving the battery to stand for 1 hour, and then recording the voltage of the battery at this time as V1. Discharging the battery at a 0.4 C for 15 seconds, and measuring the voltage after the pulse discharge and recording the voltage as V2.

Normal-temperature direct current resistance (DCR) at 50% SOC of battery = (V1 - V2)/I, where I = 0.4 C.

Table 5 and Table 6 show the performance test results of the secondary batteries in the embodiments and comparative embodiments.

**Table 5**

| | Thermal runaway temperature of battery (°C) | Cycle life of battery (Capacity retention rate) | Normal-temperature DCR (mOhm) |
|---|---|---|---|
| Embodiment 1 | 107 | 89.5% | 54 |
| Embodiment 2 | 108 | 89.7% | 53 |
| Embodiment 3 | 118 | 88.9% | 63 |
| Embodiment 4 | 147 | 88.5% | 71 |
| Embodiment 5 | 106 | 89.2% | 57 |
| Embodiment 6 | 103 | 90.1% | 71 |
| Embodiment 7 | 113 | 90.3% | 76 |
| Embodiment 8 | 119 | 91.2% | 79 |
| Embodiment 9 | 123 | 91.7% | 67 |
| Embodiment 10 | 114 | 91.3% | 65 |
| Embodiment 11 | 107 | 89.5% | 61 |
| Embodiment 12 | 110 | 93.5% | 50 |
| Embodiment 13 | 112 | 93.2% | 49 |
| Embodiment 14 | 126 | 92.4% | 53 |
| Embodiment 15 | 163 | 95.5% | 42 |
| Embodiment 16 | 175 | 96.5% | 38 |
| Embodiment 17 | 182 | 98.8% | 23 |
| Embodiment 18 | 173 | 95.7% | 48 |
| Embodiment 19 | 155 | 94.8% | 46 |
| Embodiment 20 | 160 | 95.1% | 44 |
| Embodiment 21 | 168 | 96.2% | 40 |
| Embodiment 22 | 165 | 95.9% | 41 |
| Embodiment 23 | 167 | 96.3% | 40 |

**Table 6**

| | Thermal runaway temperature of battery (°C) | Cycle life of battery (Capacity retention rate) | Normal-temperature DCR (mOhm) |
|---|---|---|---|
| Comparative Embodiment 1 | 80 | 70.5% | 141 |
| Comparative Embodiment 2 | 91 | 76.1% | 87 |
| Comparative Embodiment 3 | 94 | 80.0% | 83 |
| Comparative Embodiment 4 | 91 | 78.2% | 92 |
| Comparative Embodiment 5 | 88 | 72.5% | 132 |
| Comparative Embodiment 6 | 87 | 77.3% | 89 |
| Comparative Embodiment 7 | 87 | 80.0% | 91 |
| Comparative Embodiment 8 | 83 | 78.7% | 80 |

As can be seen from the test results in Table 5, the compound represented by Formula (1) and a given amount of ethylene carbonate are included as a solvent in the electrolytic solutions in Embodiments 1 to 11, and therefore, the thermal runaway temperature of the battery is high and is above 103 °C, and the capacity retention rate at the end of 200 cycles of the battery is above 88.5%, thereby improving the safety performance and cycle life of the battery.

In contrast to Embodiments 1 to 11 and Embodiments 12 to 14, the electrolytic solutions in Embodiments 15 to 23 further contain both a low-viscosity organic solvent and lithium bisfluorosulfonimide as an easily dissociable lithium salt, and therefore, the battery is further improved in terms of the thermal runaway temperature, the 200^{th}-cycle capacity retention rate (%), and the normal-temperature DC resistance (DCR) at 50% SOC, and achieves high safety performance, a high cycle life, and high power performance. Evidently, the compound represented by Formula (1), the low-viscosity solvent, and the easily dissociable lithium salt used together can improve the safety performance of the electrolytic solution. In addition, the compound represented by Formula (1) participates in forming the anode electrolyte interface film and the cathode electrolyte interface film, thereby helping to suppress decomposition of the electrolytic solution on the anode electrolyte interface and the cathode electrolyte interface, and in turn, improving the cycle life and normal-temperature power performance of the battery.

In contrast to the embodiments, as can be seen from the test results in Table 6, although the electrolytic solutions in Comparative Embodiments 1, 2, and 7 contain the compound represented by Formula (1), the technical effects of this application still fail to be achieved because the weight percent of ethylene carbonate in the solvent is excessive (greater than 25 wt%).

Specifically, in Comparative Embodiment 2, the weight percent of ethylene carbonate in the solvent is 26 wt%. The ethylene carbonate is oxidized to generate a large amount of gas at the positive electrode. Even if the compound represented by Formula (1) according to this application is added, the technical effects of this application still fail to be achieved. Further, as can be seen from Comparative Embodiment 2 versus Comparative Embodiments 1 and 7, even if the weight percent of the compound represented by Formula (1) is further increased (referring to Comparative Embodiment 1) or a low-viscosity organic solvent is added additionally (referring to Comparative Embodiment 7), high safety performance and a high cycle life are not achievable concurrently.

In addition, in the electrolytic solutions in Comparative Embodiments 3, 4, 5, and 8, although the weight percent of ethylene carbonate in the solvent falls within the range specified herein, the cyclic organophosphorus is used instead of the compound represented by Formula (1) according to this application. Therefore, the effects of flame retarding and anode/cathode electrolyte interface films are inferior, and the technical effects of this application fail to be achieved. Evidently, the technical effects of this application can be achieved when the compound represented by Formula (1) according to this application and a specific amount of ethylene carbonate are used concurrently.

In addition, in the electrolytic solutions prepared in Comparative Embodiments 3 to 5, a low-viscosity organic solvent and an easily dissociable lithium bisfluorosulfonimide salt are added, but the cyclic organophosphorus compound contains no fluorine. The fluorine contained in the compound represented by Formula (1) according to this application serves functions of: 1) improving the oxidation resistance of the compound; and 2) capturing hydroxyl radicals during thermal runaway, terminating heat emission reactions in thermal runaway, and enhancing safety performance. The technical effects of this application fail to be achieved because the organophosphorus compound in Comparative Embodiment 3 contains no fluorine. Further, compared with fluorine, other halogens such as chlorine and bromine fail to improve the oxidation resistance due to relatively low electronegativity. In addition, the ionic volume of chloride ions and bromide ions is relatively large, thereby being adverse to bonding hydrogen and a hydroxyl radical rapidly, that is, being adverse to improving the thermal runaway. Therefore, Comparative Embodiments 4 and 5 fail to achieve the technical effects of this application.

In contrast to Comparative Embodiment 3, even if the weight percent of ethylene carbonate in the solvent is increased in Comparative Embodiment 6, the technical effects of this application still fail to be achieved because the compound represented by Formula (1) according to this application is not used.

It is hereby noted that this application is not limited to the foregoing embodiments. The foregoing embodiments are merely examples.

## Claims

1. An electrolytic solution, comprising a solvent, wherein the solvent comprises a compound represented by Formula (1) below and ethylene carbonate, wherein, based on a total weight of the solvent, a weight percent of the ethylene carbonate is 5 wt% to 25 wt%, 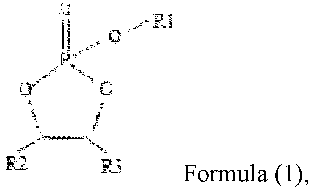 and
in the formula above, R1 is a fluorinated C1 to C6 alkyl or a fluorinated C2 to C6 alkenyl; and R2 and R3 are identical or different, and each independently, are a hydrogen atom, a fluorine atom, or a fluorinated C1 to C6 alkyl.

2. The electrolytic solution according to claim 1, wherein, based on the total weight of the solvent, the weight percent of the ethylene carbonate is 10 wt% to 20 wt%.

3. The electrolytic solution according to claim 1 or 2, wherein, based on the total weight of the solvent, a weight percent of the compound represented by Formula (1) is 5 wt% to 35 wt%, and optionally 10 wt% to 30 wt%.

4. The electrolytic solution according to any one of claims 1 to 3, wherein, in the compound represented by Formula (1), R1 is a perfluoro C1 to C6 alkyl.

5. The electrolytic solution according to any one of claims 1 to 4, wherein
in the compound represented by Formula (1), R1 is -CF₃ or -C2F₅; and R2 and R3, each independently, are a hydrogen atom or a fluorine atom.

6. The electrolytic solution according to any one of claims 1 to 5, wherein
the solvent further comprises dimethyl carbonate and/or carboxylate, and the carboxylate is at least one of methyl formate, ethyl formate, ethyl acetate, ethyl propionate, or propyl formate, and preferably is propyl formate; and
optionally, based on the total weight of the solvent, a weight percent of the compound represented by Formula (1) is denoted as W1, a weight percent of the dimethyl carbonate and/or carboxylate is denoted as W2, and therefore, the electrolytic solution satisfies: 1.5 ≤ W2/W1 ≤ 3, and optionally 2 ≤ W2/W1 ≤ 2.5.

7. The electrolytic solution according to any one of claims 1 to 6, wherein
the electrolytic solution comprises an electrolyte salt, and the electrolyte salt comprises lithium bisfluorosulfonimide and lithium hexafluorophosphate; and
a volumetric molar concentration of the lithium bisfluorosulfonimide in the electrolyte salt is denoted as C1, a volumetric molar concentration of the lithium hexafluorophosphate in the electrolyte salt is denoted as C2, and therefore, the electrolytic solution satisfies: 0.25 ≤ C1/C2 ≤ 9, and optionally 1 ≤ C1/C2 ≤ 4.

8. The electrolytic solution according to claim 7, wherein, 0.2 mol/L ≤ C1 ≤ 0.9 mol/L; and/or, 0.1 M/L ≤ C2 ≤ 0.8 M/L.

9. The electrolytic solution according to claim 7 or 8, wherein, based on a total weight of the electrolytic solution, the weight percent of the compound represented by Formula (1) is denoted as A1, a weight percent of the lithium bisfluorosulfonimide is denoted as A2, and therefore, the electrolytic solution satisfies: 0.3 ≤ A1/A2 ≤ 8.4, and optionally 0.4 ≤ A1/A2 ≤ 3.

10. The electrolytic solution according to any one of claims 1 to 9, wherein the electrolytic solution further comprises an additive, and the additive comprises vinylene carbonate.

11. The electrolytic solution according to claim 10, wherein, based on a total weight of the electrolytic solution, a weight percent of the vinylene carbonate is less than or equal to 5 wt%, and optionally is 0.1 wt% to 3 wt%.

12. The electrolytic solution according to any one of claims 1 to 11, wherein a viscosity of the electrolytic solution at 25 °C is less than or equal to 5 mPa·s, and optionally 2 mPa·s to 5 mPa·s.

13. A secondary battery, comprising an electrolytic solution according to any one of claims 1 to 12.

14. An electrical device, comprising the secondary battery according to claim 13.

## Patentansprüche

1. Elektrolytlösung, umfassend ein Lösungsmittel, wobei das Lösungsmittel eine durch die folgende Formel (1) repräsentierte Verbindung und Ethylencarbonat umfasst, wobei ein Gewichtsprozentsatz des Ethylencarbonats 5 Gew.% bis 25 Gew.% beträgt, bezogen auf ein Gesamtgewicht des Lösungsmittels, 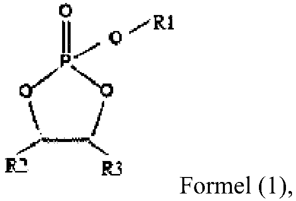 und
in der obigen Formel R1 ein fluoriertes C1- bis C6-Alkyl oder ein fluoriertes C2- bis C6-Alkenyl ist; und R2 und R3 identisch oder unterschiedlich sind und jeweils unabhängig ein Wasserstoffatom, ein Fluoratom oder ein fluoriertes C1- bis C6-Alkyl sind.

2. Elektrolytlösung nach Anspruch 1, wobei der Gewichtsprozentsatz des Ethylencarbonats, bezogen auf das Gesamtgewicht des Lösungsmittels, 10 Gew.% bis 20 Gew.% beträgt.

3. Elektrolytlösung nach Anspruch 1 oder 2, wobei ein Gewichtsprozentsatz der durch Formel (1) repräsentierten Verbindung, bezogen auf das Gesamtgewicht des Lösungsmittels, 5 Gew.% bis 35 Gew.% und gegebenenfalls 10 Gew.% bis 30 Gew.% beträgt.

4. Elektrolytlösung nach einem der Ansprüche 1 bis 3, wobei in der durch Formel (1) repräsentierten Verbindung R1 ein Perfluor-C1- bis C6-alkyl ist.

5. Elektrolytlösung nach einem der Ansprüche 1 bis 4, wobei
in der durch Formel (1) repräsentierten Verbindung R1 -CF₃ oder -C₂F₅ ist; und R2 und R3 jeweils unabhängig ein Wasserstoffatom oder ein Fluoratom sind.

6. Elektrolytlösung nach einem der Ansprüche 1 bis 5, wobei
das Lösungsmittel des Weiteren Dimethylcarbonat und/oder -carboxylat umfasst, und das Carboxylat mindestens eines von Methylformiat, Ethylformiat, Ethylacetat, Ethylpropionat oder Propylformiat ist und vorzugsweise Propylformiat ist; und
gegebenenfalls, bezogen auf das Gesamtgewicht des Lösungsmittels, ein Gewichtsprozentsatz der durch Formel (1) repräsentierten Verbindung als W1 bezeichnet wird, ein Gewichtsprozent des Dimethylcarbonats und/oder -carboxylats als W2 bezeichnet wird, und die Elektrolytlösung daher folgendes erfüllt: 1,5 ≤ W2/W1 ≤ 3 und gegebenenfalls 2 ≤ W2/W1 ≤ 2,5.

7. Elektrolytlösung nach einem der Ansprüche 1 bis 6, wobei die Elektrolytlösung ein Elektrolytsalz umfasst, und das Elektrolytsalz Lithiumbisfluorsulfonimid und Lithiumhexafluorphosphat umfasst; und
eine volumetrische molare Konzentration des Lithiumbisfluorsulfonimids in dem Elektrolytsalz als C1 bezeichnet wird, eine volumetrische molare Konzentration des Lithiumhexafluorphosphats in dem Elektrolytsalz als C2 bezeichnet wird, und die Elektrolytlösung daher folgendes erfüllt: 0,25 ≤ C1/C2 ≤ 9 und gegebenenfalls 1 ≤ C1/C2 ≤ 4.

8. Elektrolytlösung nach Anspruch 7, wobei 0,2 mol/L ≤ C1 ≤ 0,9 mol/L; und/oder 0,1 M/L ≤ C2 ≤ 0,8 M/L.

9. Elektrolytlösung nach Anspruch 7 oder 8, wobei, bezogen auf das Gesamtgewicht der Elektrolytlösung, der Gewichtsprozentsatz der durch Formel (1) repräsentierten Verbindung als Al bezeichnet wird, ein Gewichtsprozent des Lithiumbisfluorsulfonimids als A2 bezeichnet wird, und die Elektrolytlösung daher folgendes erfüllt: 0,3 ≤ A1/A2 ≤ 8,4 und gegebenenfalls 0,4 ≤ A1/A2 ≤ 3.

10. Elektrolytlösung nach einem der Ansprüche 1 bis 9, wobei die Elektrolytlösung des Weiteren ein Additiv umfasst, und wobei das Additiv Vinylencarbonat umfasst.

11. Elektrolytlösung nach Anspruch 10, wobei, bezogen auf das Gesamtgewicht der Elektrolytlösung, ein Gewichtsprozentsatz des Vinylencarbonats kleiner als oder gleich 5 Gew.% ist und gegebenenfalls 0,1 Gew.% bis 3 Gew.% ist.

12. Elektrolytlösung nach einem der Ansprüche 1 bis 11, wobei eine Viskosität der Elektrolytlösung bei 25 °C kleiner als oder gleich 5 mPa·s und gegebenenfalls 2 mPa·s bis 5 mPa·s ist.

13. Sekundärbatterie, umfassend eine Elektrolytlösung nach einem der Ansprüche 1 bis 12.

14. Elektrische Vorrichtung, umfassend die Sekundärbatterie nach Anspruch 13.

## Revendications

1. Solution électrolytique, comprenant un solvant, le solvant comprenant un composé représenté par la formule (1) ci-dessous et du carbonate d'éthylène, dans laquelle, rapporté à un poids total du solvant, un pourcentage pondéral du carbonate d'éthylène est de 5 % en poids à 25 % en poids, 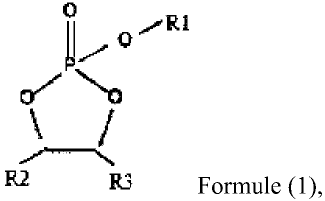 et
dans la formule ci-dessus, R1 est un groupe alkyle en C1 à C6 fluoré ou un groupe alcényle en C2 à C6 fluoré; et R2 et R3 sont identiques ou différents, et représentent chacun indépendamment un atome d'hydrogène, un atome de fluor ou un groupe alkyle en C1 à C6 fluoré.

2. Solution électrolytique selon la revendication 1 dans laquelle, rapporté au poids total du solvant, le pourcentage pondéral du carbonate d'éthylène est de 10 % en poids à 20 % en poids.

3. Solution électrolytique selon la revendication 1 ou 2 dans laquelle, rapporté au poids total du solvant, un pourcentage pondéral du composé représenté par la formule (1) est de 5 % en poids à 35 % en poids, et éventuellement de 10 % en poids à 30 % en poids.

4. Solution électrolytique selon l'une quelconque des revendications 1 à 3 dans laquelle, dans le composé représenté par la formule (1), R1 est un groupe alkyle en C1 à C6 perfluoré.

5. Solution électrolytique selon l'une quelconque des revendications 1 à 4, dans laquelle,
dans le composé représenté par la formule (1), R1 est -CF₃ ou -C₂F₅ ; et R2 et R3 représentent chacun indépendamment un atome d'hydrogène ou un atome de fluor.

6. Solution électrolytique selon l'une quelconque des revendications 1 à 5, dans laquelle
le solvant comprend en outre du carbonate et/ou carboxylate de diméthyle, et le carboxylate en est au moins un parmi le formate de méthyle, le formate d'éthyle, l'acétate d'éthyle, le propionate d'éthyle et le formate de propyle, et est de préférence le formate de propyle ; et
éventuellement, rapporté au poids total du solvant, un pourcentage pondéral du composé représenté par la formule (1) est désigné W1, un pourcentage pondéral du carbonate et/ou carboxylate de diméthyle est désigné W2, et par conséquent, la solution électrolytique satisfait : 1,5 ≤ W2/W1 ≤ 3, et éventuellement 2 ≤ W2/W1 ≤ 2,5.

7. Solution électrolytique selon l'une quelconque des revendications 1 à 6, dans laquelle
la solution électrolytique comprend un sel d'électrolyte, et le sel d'électrolyte comprend du bisfluorosulfonimide de lithium et de l'hexafluorophosphate de lithium ; et
une concentration molaire volumique du bisfluorosulfonimide de lithium dans le sel d'électrolyte est désignée C1, une concentration molaire volumique de l'hexafluorophosphate de lithium dans le sel d'électrolyte est désignée C2, et par conséquent, la solution électrolytique satisfait : 0,25 ≤ C1/C2 ≤ 9, et éventuellement 1 ≤ C1/C2 ≤ 4.

8. Solution électrolytique selon la revendication 7, dans laquelle 0,2 mol/L ≤ C1 ≤ 0,9 mol/L ; et/ou 0,1 M/L ≤ C2 ≤ 0,8 M/L.

9. Solution électrolytique selon la revendication 7 ou 8 dans laquelle, rapporté à un poids total de la solution électrolytique, le pourcentage pondéral du composé représenté par la formule (1) est désigné A1, un pourcentage pondéral du bisfluorosulfonimide de lithium est désigné A2, et par conséquent, la solution électrolytique satisfait : 0,3 ≤ A1/A2 ≤ 8,4, et éventuellement 0,4 ≤ A1/A2 ≤ 3.

10. Solution électrolytique selon l'une quelconque des revendications 1 à 9, la solution électrolytique comprenant en outre un additif, et l'additif comprenant du carbonate de vinylène.

11. Solution électrolytique selon la revendication 10 dans laquelle, rapporté à un poids total de la solution électrolytique, un pourcentage pondéral du carbonate de vinylène est inférieur ou égal à 5 % en poids, et est éventuellement de 0,1 % en poids à 3 % en poids.

12. Solution électrolytique selon l'une quelconque des revendications 1 à 11, une viscosité de la solution électrolytique à 25 °C étant inférieure ou égale à 5 mPa·s, et éventuellement de 2 mPa·s à 5 mPa·s.

13. Batterie rechargeable, comprenant une solution électrolytique selon l'une quelconque des revendications 1 à 12.

14. Dispositif électrique, comprenant la batterie rechargeable selon la revendication 13.
